# EUROPEAN PATENT APPLICATION

(11) **EP 4 503 267 A1**
(43) Date of publication of application: **05.02.2025**
(21) Application number: 22935033.5
(22) Date of filing: 28.03.2022
(51) Int. Cl.: H01M 10/647, H01M 50/105, H01M 50/136, H01M 50/202, H01M 50/211, H01M 50/238, H01M 50/242, H01M 50/244

(54) **ELECTRIC POWER STORAGE MODULE**

(71) Applicant: Kyocera Corporation, Kyoto-shi, Kyoto 612-8501 (JP)
(72) Inventor: IWAMOTO, Shohei, Kyoto-shi, Kyoto 612-8501 (JP); OOSHIMA, Katsufumi, Kyoto-shi, Kyoto 612-8501 (JP)
(74) Representative: TBK
(86) International application number: PCT/JP2022/014905
(87) International publication number: WO 2023/187878

(57) **Abstract**

An electric power storage module (X1) includes one or a plurality of secondary batteries (1) each having a flat shape and including one or a plurality of power generation bodies (20) containing a positive electrode material, a negative electrode material, and an electrolyte, and a first housing body (50) housing the one or plurality of power generation bodies. The electric power storage module (X1) further includes a casing housing the one or plurality of secondary batteries. The first housing body includes, in a part of an outer edge portion thereof, a plurality of extending portions (11) having flexibility and being fixed, in a bent state, to an inner bottom surface (10a).

## Description

### TECHNICAL FIELD

The present disclosure relates to an electric power storage module.

### BACKGROUND OF INVENTION

Patent Document 1 discloses an electrochemical cell module (electric power storage module) including a plurality of electrochemical cells and a casing that houses the plurality of electrochemical cells. In the electrochemical cell module, the electrochemical cell includes a power generation element and a package. As a result of a peripheral portion of the package being bent, a main surface of the peripheral portion is in contact with an inner side surface of the casing.

### CITATION LIST

### PATENT LITERATURE

Patent Document 1: WO 2020/179547

### SUMMARY

An electric power storage module according to an aspect of the present disclosure includes one or a plurality of electric power storage elements each having a flat shape and including one or a plurality of power generation bodies containing a positive electrode material, a negative electrode material, and an electrolyte, and a first housing body housing the one or plurality of power generation bodies. The electric power storage module further includes a casing housing the one or plurality of electric power storage elements. The first housing body includes, in a part of an outer edge portion thereof, a plurality of extending portions having flexibility and being fixed, in a bent state, to an inner bottom surface of the casing.

### BRIEF DESCRIPTION OF THE DRAWINGS

FIG. 1 is a perspective view illustrating an appearance of an electric power storage module according to the present disclosure.
FIG. 2 is a cross-sectional view taken along the line II-II in FIG 1.
FIG. 3 is a perspective view illustrating an appearance of a secondary battery included in the electric power storage module according to the present disclosure.
FIG. 4 is a perspective view illustrating an appearance of a power generation body included in the secondary battery.
FIG. 5 is an enlarged view of a region V in FIG. 2.
FIG. 6 is a cross-sectional view illustrating a structure of a connection portion between an extending portion and a bottom surface plate of a housing in the electric power storage module according to the present disclosure.
FIG. 7 is a cross-sectional view taken along the line VII-VII in FIG 6.
FIG. 8 is a diagram illustrating bending positions of the extending portions of the secondary battery according to the present disclosure.

### DESCRIPTION OF EMBODIMENTS

### Structure of Electric Power Storage Module X1

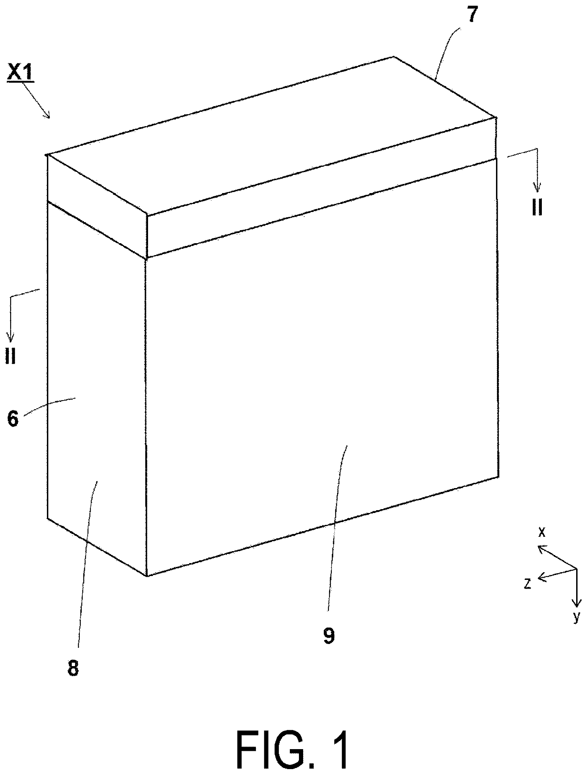

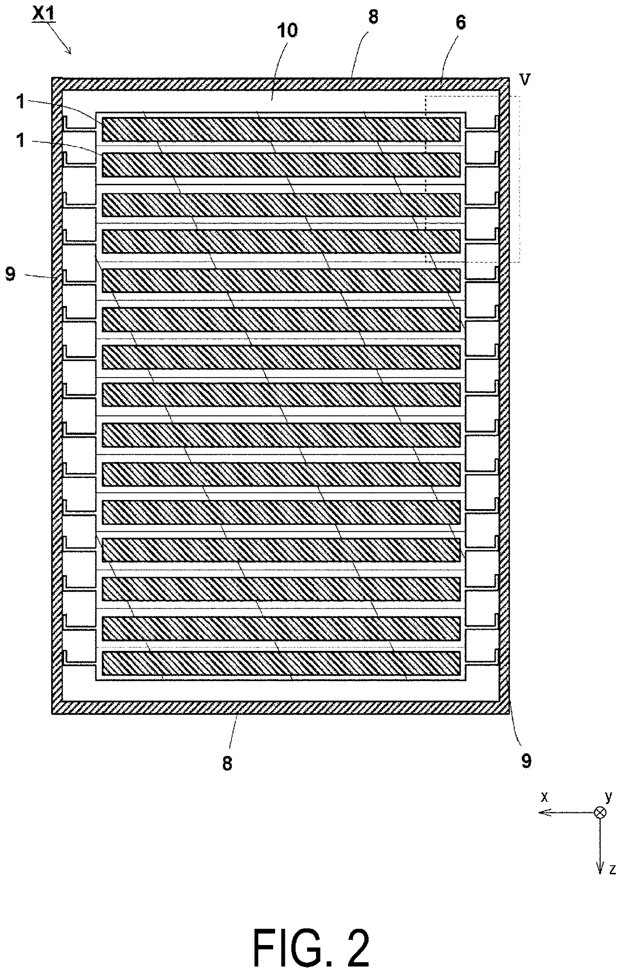

FIG. 1 is a perspective view illustrating an appearance of an electric power storage module X1 according to the present disclosure. FIG. 2 is a cross-sectional view taken along the line II-II in FIG. 1. As illustrated in FIG. 1, the electric power storage module X1 includes a casing 6. As illustrated in FIG. 2, the electric power storage module X1 further includes a plurality of secondary batteries 1 (electric power storage elements) housed inside the casing 6. However, the electric power storage module X1 may include only one of the secondary batteries 1.

### Structure of Secondary Battery 1

The secondary battery 1 functions as a battery in the electric power storage module X1. The secondary battery 1 may be, for example, a lithium ion battery. The secondary battery 1 may have a flat shape having main surfaces and side surfaces. As illustrated in FIG. 2, the secondary batteries 1 are housed inside the casing 6 in a state in which the main surfaces of the secondary batteries 1 face each other.

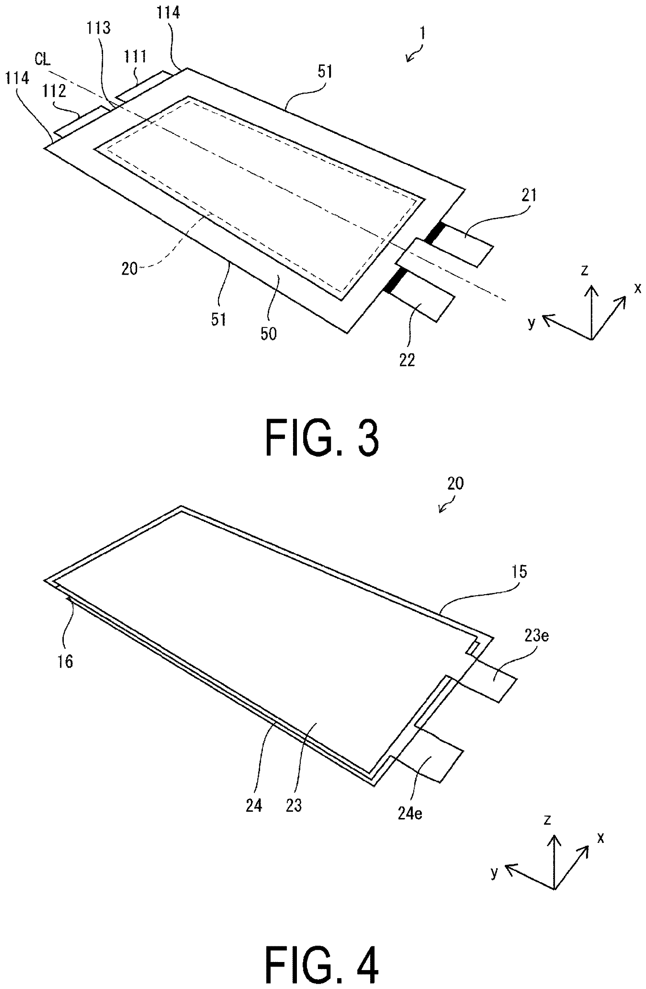

FIG. 3 is a perspective view illustrating an appearance of the secondary battery 1. The secondary battery 1 may include a power generation body 20, connection terminals 21 and 22, and a first housing body 50.

The power generation body 20 stores and discharges electricity using an electrochemical reaction. The power generation body 20 contains, for example, a positive electrode material, a negative electrode material, and an electrolyte. For simplicity, only one of the power generation bodies 20 is illustrated in FIG. 3. However, the secondary battery 1 may include a plurality of the power generation bodies 20. A specific example of the power generation body 20 will be described below with reference to FIG. 4.

The first housing body 50 may house the power generation body 20. The first housing body 50 may be made of, for example, an aluminum pouch film or a laminate film having a metal foil layer of stainless steel, nickel, or the like. The aluminum pouch film may be a film on which aluminum is vapor-deposited, or a laminate of an aluminum foil and a film. The material of the film may be, for example, polypropylene, polyethylene, nylon, or polyethylene terephthalate. The thickness of the first housing body 50 may be 50 µm or more and 300 µm or less, and may be 200 µm, for example.

When the first housing body 50 is an aluminum pouch film, the first housing body 50 may have a configuration in which two aluminum pouch films are located on both sides in a layering direction (Z-axis direction) of the power generation body 20. When the first housing body 50 is an aluminum pouch film, the first housing body 50 may have a configuration in which one aluminum pouch film is folded in two and the power generation body 20 is located therein.

The connection terminals 21 and 22 may be terminals that take out electric power from the secondary battery 1, or that supply electric power to the secondary battery 1. The connection terminals 21 and 22 may protrude from the inside to the outside of the first housing body 50. The material of the connection terminals 21 and 22 may be, for example, copper, aluminum, or nickel. The thickness of each of the connection terminals 21 and 22 may be 50 µm or more and 500 µm or less, for example, 200 µm. The connection terminals 21 and 22 may be subjected to a surface treatment for improving adhesion to an adhesive member (not illustrated). The adhesive member adheres the connection terminals 21 and 22 to the first housing body 50 located above and below the connection terminals 21 and 22, in order to determine the positions of the connection terminals 21 and 22 with respect to the first housing body 50.

The first housing body 50 may include a side portion 51. The side portion 51 is a portion to be adhered to a side surface plate 9 of the casing 6 described later. The side portion 51 has flexibility. The first housing body 50 includes a first extending portion 111 and a second extending portion 112 on the opposite side to the connection terminals 21 and 22. The first extending portion 111 and the second extending portion 112 are portions to be adhered to a bottom surface plate 10 of the casing 6 described later. The first extending portion 111 and the second extending portion 112 have flexibility. The first extending portion 111 and the second extending portion 112 are adjacent to and separated from each other. In the following description, when it is not necessary to distinguish the first extending portion 111 and the second extending portion 112 from each other, they are collectively referred to as extending portions 11.

The first housing body 50 may include a first cutout portion 113 between the first extending portion 111 and the second extending portion 112. Of the first housing body 50, (i) an end portion of the first extending portion 111 on the opposite side to the second extending portion 112 and (ii) an end portion of the second extending portion 112 on the opposite side to the first extending portion 111 may each include a second cutout portion 114.

In FIG. 3, the first extending portion 111 and the second extending portion 112 are positioned to be symmetrical to each other with respect to a center line CL of the first housing body 50 and to be separated from end portions of the first housing body 50. However, the positions of the first extending portion 111 and the second extending portion 112 are not limited thereto. For example, the first extending portion 111 and the second extending portion 112 may not be separated from each other. For example, at least one of the first extending portion 111 or the second extending portion 112 may not be separated from the end portion of the first housing body 50.

The electric power storage module X1 may further include an extending portion 11 other than the first extending portion 111 and the second extending portion 112. In this case also, a plurality of the extending portions 11 may be in contact with each other, or at least two of the plurality of extending portions 11 may be separated from each other. Among the plurality of extending portions 11, the extending portion 11 positioned at the end portion of the first housing body 50 in the X direction or the -X direction may be in contact with the end portion, or may be separated from the end portion.

FIG. 4 is a perspective view illustrating an appearance of the power generation body 20 of the secondary battery 1. As illustrated in FIG. 4, the power generation body 20 may have a sheet-like shape. The power generation body 20 having the sheet-like shape may include a positive electrode 23 and a negative electrode 24.

The secondary battery 1 may further include a second housing body 15 that individually houses the power generation body 20. When the number of the power generation bodies 20 included in the secondary battery 1 is one, the number of the second housing bodies 15 each housing the power generation body 20 is also one. When the secondary battery 1 includes a plurality of the power generation bodies 20, a plurality of the second housing bodies 15 each housing the power generation body 20 are also provided. When a plurality of the second housing bodies 15 each housing the power generation body 20 are layered, the plurality of second housing bodies 15 may be adhered to each other by an adhesive layer (not illustrated). The material of the second housing body 15 may be, for example, film-shaped polyethylene terephthalate (PET) or nylon. More specifically, for example, two of the second housing bodies 15 may be located on both sides in the layering direction (Z-axis direction) of the power generation bodies 20. The thickness of the base material of the second housing body 15 may be, for example, 10 µm or more and 40 µm or less, and may be, for example, 25 µm. The material of the adhesive layer may be, for example, polypropylene or polyethylene.

The second housing body 15 may be, for example, transparent. FIG. 4 is a diagram illustrating a state in which the power generation body 20 can be seen through the second housing body 15, as a result of using the transparent second housing body 15 in the power generation body 20.

The second housing body 15 may include a cutout portion 16. For example, the cutout portion 16 may be provided in each of the second housing body 15 on the positive electrode 23 side and the second housing body 15 on the negative electrode 24 side. By providing the cutout portion 16 as an unsealed portion in part of the power generation body 20, a gas generated by a decomposition reaction of an electrolytic solution or a small amount of moisture in the power generation body 20 can be released to the outside of the power generation body 20.

The positive electrode 23 may include an exposed portion 23e exposed from the second housing body 15. The negative electrode 24 may include an exposed portion 24e exposed from the second housing body 15. The connection terminals 21 and 22 may be electrically connected to the exposed portions 23e and 24e, respectively, by ultrasonic welding, laser welding, or resistance welding, for example.

The secondary battery 1 may have a configuration in which the plurality of power generation bodies 20 are individually housed in the second housing bodies 15, and the plurality of power generation bodies 20 housed in the second housing bodies 15 are further housed in the first housing body 50. With this configuration, the power generation bodies 20 are doubly housed, and the stability of the secondary battery 1 can thus be enhanced. The first housing body 50 may be housed in yet another housing body. However, the secondary battery 1 may include the power generation body 20, and the power generation body 20 may be housed in at least one housing body.

The secondary battery 1 has a configuration in which a plurality of the power generation bodies 20 are layered, for example, a configuration in which ten layers of the power generation bodies 20 are layered. However, the secondary battery 1 according to the present disclosure may include a plurality of layers, different from ten layers, of the power generation bodies 20, or may include only one layer of the power generation body 20. When the secondary battery 1 includes a plurality of layers of the power generation bodies 20, those power generation bodies 20 may be layered. In a plan view of the secondary battery 1 illustrated in FIG. 3, a portion other than the connection terminals 21 and 22 may have a substantially rectangular shape or a different shape. In a plan view of the power generation body 20 illustrated in FIG. 4, a portion other than the exposed portions 23e and 24e may have a substantially rectangular shape or a different shape.

The positive electrode material may be a mixture of a positive electrode active material and a conductive additive. The negative electrode material may be a mixture of a negative electrode active material and a conductive additive. The positive electrode active material may be, for example, lithium cobalt oxide, lithium nickel oxide, lithium iron phosphate, or lithium manganese oxide. The negative electrode active material may be, for example, graphite or lithium titanate. The conductive additive may be, for example, carbon black or acetylene black. However, the positive electrode active material, the negative electrode active material, and the conductive additive are not limited thereto.

The positive electrode material may have a so-called clay-like property in which an electrolytic solution is mixed into a mixture composed of the positive electrode active material and the conductive additive. The negative electrode material may have a so-called clay-like property in which an electrolytic solution is mixed into a mixture composed of the negative electrode active material and the conductive additive. The positive electrode 23 may be an electrode obtained by applying the positive electrode material onto aluminum foil. The negative electrode 24 may be an electrode obtained by applying the negative electrode material onto copper foil.

The electrolytic solution is obtained by dissolving a lithium salt as an electrolyte in a non-aqueous solvent. The nonaqueous solvent may be a carbonate-based solvent. The carbonate-based solvent may be γ-butyrolactone, ethylene carbonate, or both γ-butyrolactone and ethylene carbonate. The carbonate-based solvent may contain another solvent as long as it contains at least one of γ-butyrolactone or ethylene carbonate. Examples of other solvents include propylene carbonate, dimethyl carbonate, dimethoxyethane, diethyl carbonate, tetrahydrofuran, and triethylene glycol dimethyl ether. The electrolyte may be lithium hexafluorophosphate or lithium bis (fluorosulfonyl) imide (LiFSI).

The power generation body 20 may further include a separator. **In** this case, the power generation body 20 may have a structure in which the positive electrode 23 and the negative electrode 24 are layered with the separator interposed therebetween. The separator may function as an insulating member that insulates the positive electrode 23 and the negative electrode 24. As the separator, for example, a sheet-like non-woven fabric or porous material may be used.

The positive electrode material and the negative electrode material need not necessarily have the clay-like property. In this case, the electrolytic solution need not necessarily be mixed into the positive electrode active material and the negative electrode active material. In this case, the inside of the power generation body 20 may be filled with an electrolytic solution, and the electrolytic solution may be impregnated and held in the separator.

### Structure of Casing 6

The casing 6 includes a space for housing the plurality of secondary batteries 1. The casing 6 protects the secondary batteries 1 from the external environment. Specifically, the casing 6 protects the secondary batteries 1 from an external force received from the external environment. The casing 6 may have a rectangular parallelepiped box-shape.

The casing 6 may include, for example, two main surface plates 8, two of the side surface plates 9, the bottom surface plate 10, and a terminal cover 7. The terminal cover 7 is provided to protect the connection terminals 21 and 22 of the secondary battery 1. The main surface plates 8 are provided to protect the main surfaces of the secondary batteries 1. The side surface plates 9 are provided to protect the side surfaces of the secondary batteries 1.

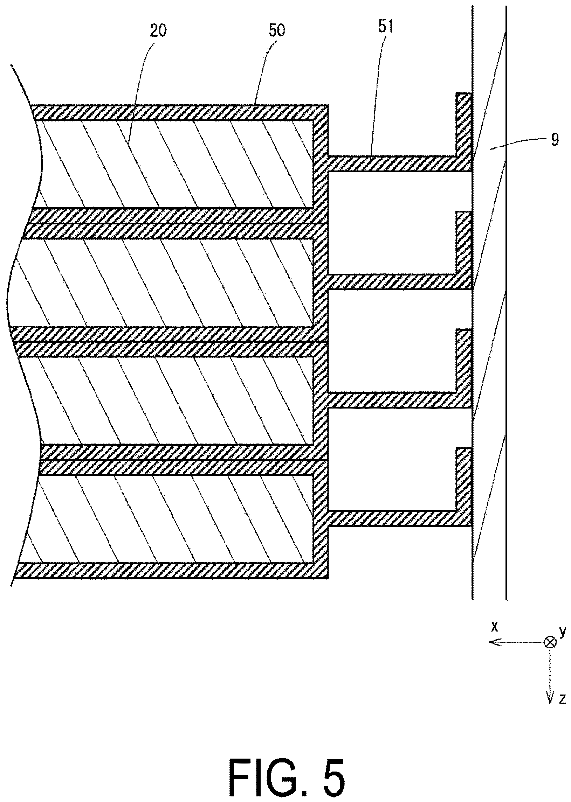

FIG. 5 is an enlarged view of a region V in FIG. 2. As illustrated in FIG. 5, the side portion 51 of the first housing body 50 may be adhered to the side surface plate 9, in a state in which a part of the side portion 51 is bent. The side portion 51, of the first housing body 50, on the opposite side to the side portion 51 illustrated in FIG. 5 may be adhered to the side surface plate 9 on the opposite side. In the present embodiment, the secondary battery 1 is held in the casing 6 mainly by a connection portion between the side portion 51 of the first housing body 50 and the side surface plate 9. Thus, from the viewpoint of dispersing the weight of the secondary battery 1 applied to the connection portion between the side portion 51 and the side surface plate 9, the entire side portion 51 in a direction along the outer edge of the first housing body 50 may be adhered to the side surface plate 9.

### Connection Portion between Extending Portion 11 and Bottom Surface Plate 10 of Casing 6

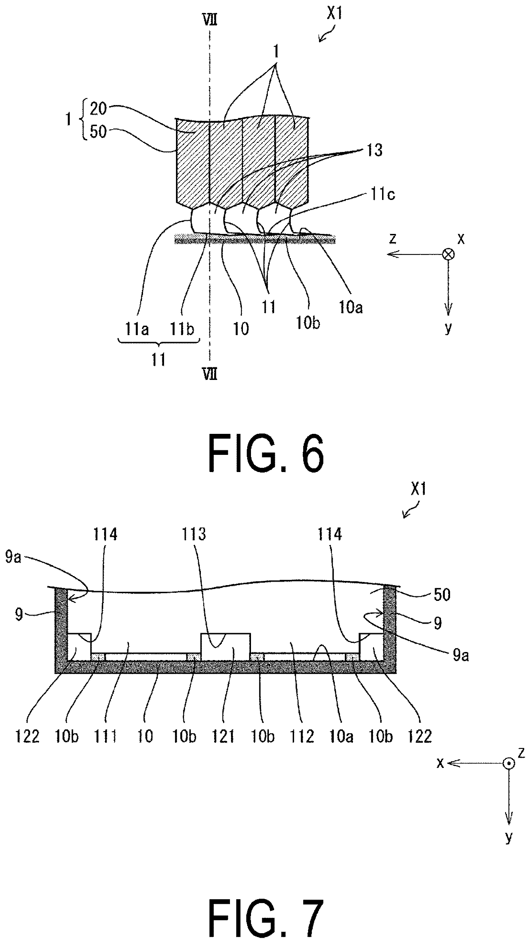

FIG. 6 is a cross-sectional view illustrating a structure of a connection portion between the extending portion 11 and the bottom surface plate 10 of the casing 6 in the electric power storage module X1. In the electric power storage module X1, the extending portion 11 having flexibility is fixed to an inner bottom surface 10a, which is an inner surface of the bottom surface plate 10 of the casing 6, in a state in which the extending portion 11 is bent.

As described above, the extending portion 11 is a generic term for the first extending portion 111 and the second extending portion 112. In the electric power storage module X1, the secondary battery 1 may deform due to expansion and shrinkage of the secondary battery 1, a vibration of the electric power storage module X1, or the like. In the electric power storage module X1, the first extending portion 111 and the second extending portion 112 individually deform in response to the deformation of the secondary battery 1, and thus stresses caused by the deformation of the secondary battery 1 can be alleviated.

Specifically, the extending portion 11 may include a non-fixed portion 11a and a fixed portion 11b. The non-fixed portion 11a is a portion, of the first housing body 50, which is located at the lower end of the power generation body 20 and is at least partially curved. The fixed portion 11b is a portion, of the extending portion 11, which is connected to the non-fixed portion 11a, faces the inner bottom surface 10a, and is at least partially fixed to the inner bottom surface 10a. The fixed portion 11b is fixed by being adhered to the inner bottom surface 10a via an adhesive layer 10b. The adhesive layer 10b is a layer of an adhesive located at the inner bottom surface 10a. The adhesive, which is the material of the adhesive layer 10b, is not particularly limited, and a known adhesive can be used.

By the extending portion 11 including the fixed portion 11b, the secondary battery 1 can be fixed to the inner bottom surface 10a. Since the extending portion 11 includes the non-fixed portion 11a, when the secondary battery 1 deforms, the non-fixed portion 11a deforms, and thus the stresses caused by the deformation of the secondary battery 1 can be alleviated.

An air layer 13 is present between the secondary battery 1 and the inner bottom surface 10a (in a portion, of the electric power storage module X1, in which the extending portion 11 is present). Since the non-fixed portion 11a is at least partially curved, the area of the extending portion 11 in contact with the air layer 13 is increased as compared with a case in which the non-fixed portion 11a is not curved. Therefore, heat generated in the secondary battery 1 can be easily released from the extending portion 11 to the outside.

As illustrated in FIG. 6, a part of the non-fixed portion 11a may overlap the fixed portion 11b of another one of the secondary batteries 1 that is adjacent to the secondary battery 1 including the non-fixed portion 11a. In FIG. 6, a vicinity portion 11c of a boundary portion between the non-fixed portion 11a and the fixed portion 11b overlaps the fixed portion 11b of the other secondary battery 1 that is adjacent to the secondary battery 1 including the non-fixed portion 11a. The vicinity portion 11c is a part of the non-fixed portion 11a and has a shape continuous with the fixed portion 11b. Since the vicinity portion 11c overlaps the fixed portion 11b of the other secondary battery 1, the vicinity portion 11c is not fixed to the inner bottom surface 10a.

In the example illustrated in FIG. 6, the length of the non-fixed portion 11a is longer than the length thereof in a case in which the vicinity portion 11c does not overlap the fixed portion 11b of the other secondary battery 1. As a result of the non-fixed portion 11a having such a length, when the secondary battery 1 deforms, the stresses are easily alleviated. The non-fixed portion 11a may overlap the fixed portion 11b of the other secondary battery 1 adjacent to the secondary battery 1 including that non-fixed portion 11a, in a wider range than that of the example illustrated in FIG. 6.

FIG. 7 is a cross-sectional view taken along the line VII-VII in FIG. 6. The line VII-VII in FIG. 6 extends along a boundary between two adjacent ones of the first housing bodies 50. Thus, a surface of the first housing body 50 is illustrated in FIG. 7 rather than a cross section thereof. As illustrated in FIG. 7, the electric power storage module X1 may include a first space 121. The first space 121 is a space, between the first extending portion 111 and the second extending portion 112, that is continuous across the plurality of secondary batteries 1 in a direction perpendicular to the main surfaces of the secondary batteries 1 (a direction perpendicular to the paper surface in FIG. 7), that is, in the Z direction, in a state in which the electric power storage module X1 includes the plurality of secondary batteries 1 whose main surfaces face each other.

For example, when all of the secondary batteries 1 have the same shape, the first space 121 is continuous across all of the secondary batteries 1. However, in the electric power storage module X1, all of the secondary batteries 1 need not necessarily have the same shape. Even in this case, at least two of the secondary batteries 1 adjacent to each other may have a shape in which the first spaces 121 are continuous with each other.

Specifically, as described above, the first housing body 50 may include the first cutout portion 113 between the first extending portion 111 and the second extending portion 112. Thus, the first space 121 is formed between the first cutout portions 113 and the bottom surface plate 10, at a position at which the first cutout portions 113 are continuous with each other.

Since the electric power storage module X1 includes the first space 121, the air easily flows inside the electric power storage module X1 through the first space 121. Thus, the temperature inside the electric power storage module X1 is easily made uniform.

As illustrated in FIG. 7, the electric power storage module X1 may include a second space 122. The second space 122 is a space between at least one of the first extending portions 111 or the second extending portions 112, and an inner surface 9a, which is an inner surface of the side surface plate 9 of the casing 6. The second space 122 is continuous across the plurality of secondary batteries 1, in the state in which the electric power storage module X1 includes the plurality of secondary batteries 1 whose main surfaces face each other.

For example, when all the secondary batteries 1 have the same shape, the second space 122 is continuous across all the secondary batteries 1. However, as described above, in the electric power storage module X1, all of the secondary batteries 1 need not necessarily have the same shape. Even in this case, at least two of the secondary batteries 1 adjacent to each other may have a shape in which the second spaces 122 are continuous with each other.

Specifically, as described above, the first housing body 50 may include the second cutout portion 114 in each of (i) the end portion of the first extending portion 111 on the opposite side to the second extending portion 112 and (ii) the end portion of the second extending portion 112 on the opposite side to the first extending portion 111. Therefore, the second space 122 is formed between the second cutout portions 114, the bottom surface plate 10, and the side surface plate 9, at a position at which the second cutout portions 114 are continuous with each other.

Since the electric power storage module X1 includes the second space 122, the air easily flows inside the electric power storage module X1 through the second space 122. Thus, the temperature inside the electric power storage module X1 is easily made uniform.

The electric power storage module X1 need not necessarily include both the first space 121 and the second space 122. Even when the electric power storage module X1 includes only one of the first space 121 and the second space 122, the air easily flows inside the electric power storage module X1 through the one of the first space 121 and the second space 122. However, when the electric power storage module X1 includes both the first space 121 and the second space 122, the air more easily flows inside the electric power storage module X1.

The electric power storage module X1 need not necessarily include the second spaces 122 both (i) between the first extending portion 111 and the side surface plate 9 and (ii) between the second extending portion 112 and the side surface plate 9, and the electric power storage module X1 may include the second space 122 only in one of (i) and (ii). However, in a case in which the electric power storage module X1 includes the second spaces 122 in both (i) and (ii), the air more easily flows inside the electric power storage module X1.

When the secondary battery 1 includes at least one of the first cutout portion 113 or the second cutout portion 114, in the electric power storage module X1, the length of an adhered portion between the inner bottom surface 10a and the first housing body 50 in a direction parallel to the main surfaces of the secondary battery 1 is shorter than the length thereof in a case in which an entire outer edge portion of the first housing body 50 facing the inner bottom surface 10a is adhered to the inner bottom surface 10a. Thus, in the electric power storage module X1, the weight of the secondary battery 1 per unit length applied to the adhered portion between the first housing body 50 and the inner bottom surface 10a becomes larger than the weight thereof in the case in which the entire outer edge portion of the first housing body 50 facing the inner bottom surface 10a is adhered to the inner bottom surface 10a.

However, as described above, in the electric power storage module X1, the secondary battery 1 is held in the casing 6 mainly by the connection portion between the side portion 51 of the first housing body 50 and the side surface plate 9. In other words, the weight of the secondary battery 1 applied to the extending portion 11 is smaller than the weight of the secondary battery 1 applied to the side portion 51. Therefore, in the electric power storage module X1, the likelihood that the adhesion between the inner bottom surface 10a and the first housing body 50 may be released as a result of the weight of the secondary battery 1 being applied to the extending portion 11 is negligibly small.

The lengths of the first extending portion 111 and the second extending portion 112 in a direction parallel to the inner bottom surface 10a may be 1 mm to 20 mm. When the lengths of the first extending portion 111 and the second extending portion 112 are in such a range, the stability of the secondary battery 1 in the casing 6 can be improved, and the stresses generated due to the deformation of the secondary battery 1 can be alleviated. The lengths of the first extending portion 111 and the second extending portion 112 in the direction parallel to the inner bottom surface 10a may be equal to or different from each other.

As illustrated in FIG. 7, in the electric power storage module X1, only a part of a portion, of each of the first extending portion 111 and the second extending portion 112, facing the inner bottom surface 10a may be fixed by being adhered to the inner bottom surface 10a via the adhesive layer 10b. When the extending portion 11 is fixed to the inner bottom surface 10a in this manner, a clearance is created between a portion, of the extending portion 11, that is not adhered to the inner bottom surface 10a via the adhesive layer 10b, and the inner bottom surface 10a. Thus, the air easily flows inside the electric power storage module X1 through the clearance between the extending portion 11 and the inner bottom surface 10a. Thus, the temperature inside the electric power storage module X1 is easily made uniform.

Specifically, in the electric power storage module X1, only both ends of the portion, of each of the plurality of extending portions 11, facing the inner bottom surface 10a may be fixed by being adhered to the inner bottom surface 10a via the adhesive layer 10b. When the extending portion 11 is fixed to the inner bottom surface 10a in this manner, the above-described clearance is created in a portion, other than the both ends, of the portion in which the extending portion 11 and the inner bottom surface 10a face each other, and the air easily flows through the clearance. By reducing a region of the extending portion 11 adhered to the inner bottom surface 10a, an amount of the adhesive to be used can be reduced. Since both ends of the extending portion 11 are adhered to the inner bottom surface 10a, the likelihood that the adhesion may be released can be reduced.

An example of a method for fixing the extending portion 11 to the inner bottom surface 10a by the adhesive layer 10b will be described below. First, an adhesive is disposed on the inner bottom surface 10a so as to be parallel to the side surface plate 9 and to be disposed along a straight line passing through positions corresponding to both ends of the plurality of extending portions 11 when the plurality of secondary batteries 1 are housed in the casing 6. Subsequently, the plurality of secondary batteries 1 are housed in the casing 6 so that both ends of the extending portions 11, which are in a bent state, are in contact with the adhesive disposed on the inner bottom surface 10a. By forming the adhesive layer 10b by solidifying the adhesive in this state, only both ends of the extending portions 11 included in the plurality of secondary batteries 1 are fixed by being adhered to the inner bottom surface 10a via the adhesive layer 10b.

The thickness of the adhesive layer 10b may be 0.1 mm or more. When the thickness of the adhesive layer 10b is set in this manner, a clearance that is large enough for the air to flow through is created between the inner bottom surface 10a and the portion, of the extending portion 11, that is not adhered to the inner bottom surface 10a via the adhesive layer 10b.

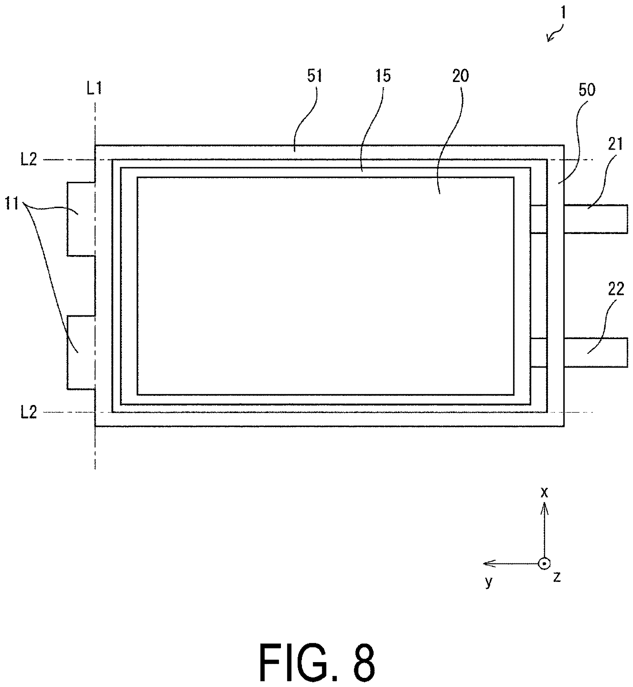

FIG. 8 is a diagram illustrating bending positions of the extending portions 11 in the secondary battery 1. In FIG. 8, an alternate long and short dash line L1 indicates bending positions at which the extending portions 11 are to be bent when the secondary battery 1 is housed in the casing 6 of the electric power storage module X1. FIG. 8 is a partially transparent view of the inside of the secondary battery 1 for describing the positions of the power generation body 20, the second housing body 15, and the like. The bending position may be outside the second housing body 15. The bending position in FIG. 8 is located on a boundary line between the extending portion 11 and a portion other than the extending portion 11. However, the bending position of the extending portion 11 in the secondary battery 1 is not limited thereto.

In this case, even when the extending portion 11 is bent, the second housing body 15 is not bent inside the first housing body 50. In FIG. 8, an alternate long and short dash line L2 indicates a bending position at which the side portion 51 is bent when the secondary battery 1 is housed in the casing 6 of the electric power storage module X1. The bending position at which the side portion 51 is bent may also be outside the second housing body 15.

When the bending positions of the extending portion 11 and the side portion 51 in the secondary battery 1 are not outside the second housing body 15, the second housing body 15 is also in a bent state in a state in which the extending portion 11 is bent. In this case, when the main surface of the secondary battery 1 is viewed in a plan view, no space is present between the first housing body 50 and the second housing body 15 of the secondary battery 1 housed in the casing 6. Therefore, when a gas is generated inside the secondary battery 1, the pressure inside the secondary battery 1 increases due to the gas, and there is a possibility that the secondary battery 1 may burst.

On the other hand, in the electric power storage module X1, since the extending portion 11 and the side portion 51 are bent outside the second housing body 15, a space is created between the first housing body 50 and the second housing body 15 of the secondary battery 1 housed in the casing 6 when the main surface of the secondary battery 1 is viewed in a plan view. When a gas is generated inside the secondary battery 1, the space expands to the front side and the back side of the paper surface in FIG. 8, and an increase in the pressure inside the secondary battery 1 caused by the gas is alleviated. Therefore, in the electric power storage module X1, the likelihood that the secondary battery may burst due to the gas generated inside the secondary battery 1 is reduced as compared with a case in which the bending positions of the extending portion 11 and the side portion 51 are not outside the second housing body 15.

### Supplementary Note

In the present disclosure, the invention has been described above based on the various drawings and examples. However, the invention according to the present disclosure is not limited to each embodiment described above. That is, the embodiments of the invention according to the present disclosure can be modified in various ways within the scope illustrated in the present disclosure, and embodiments obtainable by appropriately combining the technical means disclosed in different embodiments are also included in the technical scope of the invention according to the present disclosure. In other words, a person skilled in the art can easily make various variations or modifications based on the present disclosure. Note that these variations or modifications are included within the scope of the present disclosure.

### REFERENCE SIGNS

### 1 Secondary battery (electric power storage element)

6 Casing
10a Inner bottom surface
10b Adhesive layer
11 Extending portion
11a Non-fixed portion
11b Fixed portion
111 First extending portion
112 Second extending portion
121 First space
122 Second space
20 Power generation body
15 Second housing body
50 First housing body
X1 Electric power storage module

## Claims

1. An electric power storage module comprising:
one or a plurality of electric power storage elements each having a flat shape and comprising
one or a plurality of power generation bodies containing a positive electrode material, a negative electrode material, and an electrolyte, and
a first housing body housing the one or plurality of power generation bodies; and
a casing housing the one or plurality of electric power storage elements, wherein
the first housing body comprises, in a part of an outer edge portion thereof, a plurality of extending portions having flexibility and being fixed, in a bent state, to an inner bottom surface of the casing.

2. The electric power storage module according to claim 1, wherein
each of the plurality of extending portions comprises
a non-fixed portion, at least a part of the non-fixed portion being in a curved state, and
a fixed portion connected to the non-fixed portion and facing the inner bottom surface, at least a part of the fixed portion being fixed to the inner bottom surface.

3. The electric power storage module according to claim 2, wherein
a plurality of the electric power storage elements are provided, and
a part of the non-fixed portion overlaps the fixed portion of the first housing body of another one of the electric power storage elements that is adjacent to the electric power storage element of the first housing body comprising the non-fixed portion.

4. The electric power storage module according to any one of claims 1 to 3, wherein
the plurality of extending portions comprise, in an outer edge portion of the electric power storage element, a first extending portion and a second extending portion that are positioned to be adjacent to and separated from each other, and
when the electric power storage module comprises the plurality of electric power storage elements whose main surfaces face each other, the electric power storage module comprises a first space in which spaces between the first extending portions and the second extending portions are continuous across the plurality of electric power storage elements.

5. The electric power storage module according to any one of claims 1 to 4, wherein
the plurality of extending portions comprise, in an outer edge portion of the electric power storage element, a first extending portion and a second extending portion that are positioned to be adjacent to and separated from each other, and
when the electric power storage module comprises the plurality of electric power storage elements whose main surfaces face each other, the electric power storage module comprises a second space in which spaces between at least one of the first extending portions or the second extending portions, and an inner side surface of the casing are continuous across the plurality of electric power storage elements.

6. The electric power storage module according to any one of claims 1 to 5, wherein
only a part of a portion, of each of the plurality of extending portions, facing the inner bottom surface is fixed by being adhered to the inner bottom surface via an adhesive layer, which is a layer of an adhesive located at the inner bottom surface.

7. The electric power storage module according to claim 6, wherein
only both ends of the portion, of each of the plurality of extending portions, facing the inner bottom surface are fixed by being adhered to the inner bottom surface via the adhesive layer.

8. The electric power storage module according to any one of claims 1 to 7, wherein
the electric power storage element comprises one or a plurality of second housing bodies each housing the power generation body,
the first housing body houses the one or plurality of second housing bodies, and
a position at which each of the plurality of extending portions is bent is located outside the second housing body.
